# EUROPEAN PATENT SPECIFICATION

(11) **EP 2 808 677 B1**
(45) Date of publication and mention of the grant of the patent: **22.09.2021**
(21) Application number: 14175952.2
(22) Date of filing: 01.07.2013
(51) Int. Cl.: G01N 27/85, G01V 3/08

(54) **Method for non-contact metallic constructions assessment**
Verfahren zum berührungslosen Prüfen von metallischen Konstruktionen
Procédé pour le contrôle sans contact des constructions métalliques

(30) Priority: 27.10.2012 US 201213662427; 12.11.2012 US 201213674118
(43) Date of publication of application: 03.12.2014
(62) Divisional of application: 13174467.4
(73) Proprietor: Goroshevskiy, Valerian, Moscow 111141 (RU); Kamaeva, Svetlana, Moscow 105077 (RU); Kolesnikov, Igor, Moscow 105203 (RU)
(72) Inventor: Goroshevskiy, Valerian, 111141 Moscow (RU); Kamaeva, Svetlana, 105077 Moscow (RU); Kolesnikov, Igor, 105203 Moscow (RU); Ivlev, Leonid, 124498 Moscow (RU)
(74) Representative: Zahn, Matthias

(56) References cited:
- RU-C2- 2 264 617
- RU-U1- 88 453
- US-A1- 2010 030 491
- KEXI LIAO ET AL: "Standard and Application by Using Non-Contact Magnetic Tomography Method for Pipeline Technical Conditions Diagnosis", INTERNATIONAL CONFERENCE ON PIPELINES AND TRENCHLESS TECHNOLOGY 2011: (ICPTT 2011); BEIJING, CHINA, 26 - 29 OCTOBER 2011,, 26 October 2011 (2011-10-26), pages 1049-1058, XP009172387, DOI: 10.1061/41202(423)112 ISBN: 978-1-61839-212-1
- GEORGE JANEGA ET AL: "NYSEARCH's Validation Program Of Transkor's Magnetic Tomography Method Of Pipeline Inspection", PIPELINE & GAS JOURNAL, 1 June 2011 (2011-06-01), pages 30-31, XP055148364,
- George Janega: "R & D - Pipeline Integrity Management", , 18 January 2012 (2012-01-18), XP055148366, Retrieved from the Internet: URL:http://www.necorrosionconference.org/u ploads/NACE_2012_-_NYSEARCH_Integrity_Mana gement_Overview.pdf [retrieved on 2014-10-22]
- HUAIXIN ZHANG ET AL: "Oil and Gas Pipeline Quantitative Risk Assessment System Development with Intermediate Database Technology", INTERNATIONAL CONFERENCE ON PIPELINES AND TRENCHLESS TECHNOLOGY 2011: (ICPTT 2011); BEIJING, CHINA, 26 - 29 OCTOBER 2011,, 26 October 2011 (2011-10-26), pages 569-577, XP009172337, DOI: 10.1061/41202(423)63 ISBN: 978-1-61839-212-1
- Anonymous: "Transkor Intl UK Ltd ::: Summary of Procedure", , 16 April 2010 (2010-04-16), XP055399223, Retrieved from the Internet: URL:https://web.archive.org/web/2010041618 5222/http://www.transkor-intl.com/MTMFeatu res/page1.html [retrieved on 2017-08-17]
- Anonymous: "Transkor Intl UK Ltd ::: Gallery", , 18 April 2010 (2010-04-18), XP055399246, Retrieved from the Internet: URL:https://web.archive.org/web/2010041802 2507/http://www.transkor-intl.com:80/Galle ry/page3.html [retrieved on 2017-08-17]
- Anonymous: "MTM-A New Technology for Realizing Non-contact Reliability Detection of Pipeline Defects", , 12 April 2012 (2012-04-12), pages 1-9, XP055401419, Retrieved from the Internet: URL:https://wenku.baidu.com/view/6ae7cb6ca 45177232f60a2d7.html [retrieved on 2017-08-25]
- CARDENAS ORTIZ ET AL: "A comparative study of unpiggable pipeline inspection techniques", PIPELINE PIGGING AND INTEGRITY MANAGEMENT: PPIM 2012; 24TH YEAR; HOUSTON, FEBRUARY 8 - 9; INCORPORATING UNPIGGABLE PIPELINE SOLUTIONS F,, vol. 24, 8 February 2012 (2012-02-08), pages 1-18, XP009172381,

## Description

### FIELD OF INVENTION

The present invention relates broadly to a method for continuous (extended) metallic structures inspection and monitoring for possible mechanical defects; in particular, to magneto-graphic quality control methods, such as magnetic tomography, providing a real-time structural status as well as a priority order for immediate and long-term repairs and maintenance work required.

### BACKGROUND OF THE INVENTION

This invention can be used in various fields where constructions are tested for continuity defects in not-so-easily accessible areas. Examples of device and method implementation may include pipes for oil and gas industry, detection of flaws in rolled products in metallurgical industry, welding quality of heavy duty equipment such as ships and reservoirs, etc. It is especially important for inspection of loaded constructions, such as pressured pipes, infrastructure maintenance, nuclear power plant monitoring, bridges, corrosion prevention and environment protection.

Similar to the modes of transportation like roads, railroads, and electric transmission lines, the pipelines have an important role in the nation's economy, belonging to the long linear assets. They typically cross large distances from the points of production and import facilities to the points of consumption. Like the other modes of transportation, pipelines require very large initial investment to be built, having long exploitation periods when properly maintained. Like any engineering structure, pipelines do occasionally fail. While pipeline rates have little impact on the price of a fuel, its disruptions or lack of capacity can constrain supply, potentially causing very large price spikes. That's why pipelines, such as ones used in the oil and gas industry, require regular inspection and maintenance before potentially costly failures occur.

The major causes of pipeline failures around the world are external interference and corrosion; therefore, assessment methods are needed to determine the severity of such defects when they are detected in pipelines. Pipeline integrity management is the general term given to all efforts (design, construction, operation, maintenance, etc.) directed towards ensuring continuing pipeline integrity.

Traditional method of assessing the structural integrity typically complemented by flaw detection using in-line inspection (ILI), detecting and evaluating various metal defects organized by area (clusters), assessing their danger by calculating a level of stress-deformed state (SDS), and deciding on a permissible operating pressure with evaluated factor of repair (EFR), based on residual pipe wall thickness (for defects of "metal loss" - corrosion type).

As a contact technique, pigging devices has been used for many years to maintain larger diameter pipelines in the oil industry. Today, however, the use of smaller diameter pigging devices is increasing in many plants as plant operators search for increased efficiencies and reduced costs. Unfortunately, the ILI using intelligent pigging is unavailable for a wide range objects that require full disruptive inspection and significant spending on repair preparation. While the ILI method is suitable for the initial flaw detection, it is less efficient for the relative degree (ranking) of the risk-factor evaluation, as well as for defective pipeline serviceability calculation.

Pipe-line pigging device can detect the following types of defects: i) changing in geometry: dents, wavy surface, deformed shape of cross-section; ii) metal loss, having mechanical, technological or corrosion nature; material discontinuity: layering and inclusions; iii) cracks; iv) all types of welding defects.

Pipe-line pigging is a very expensive and labor-consuming method. The major limitation of this method is the fact that a large part of pipe-lines are not prepared for the pigging device operation, e.g. due to lack of input/output chambers for pig-flow device launching and pipe-line cleaning access, partially blocked pipe cross-section due to the welding artifacts, geometrical abnormalities and large slopes (small radius turns) of the pipeline layout. In order to make the pipe-line pigging method possible, a significant preparation has to be done in advance, in particular, the high residual level magnetization (saturated magnetic fields) of the pipe-line has to be performed before using the pig-flow device. This causes future technical problems of the pipeline demagnetization that required for actual pipe repair after the pigging.

Moreover, the evaluation of the absolute values of mechanical flaws by pigging device is particular difficult due to the multiple additional factors that have to be taken into account, e.g. bearing capacity of the soil, local cyclical loads (temperature, etc.).

Typically, a pipeline company will have a thorough pipeline safety program that will include a routine for the identification of pipeline defects and review of pipeline integrity. Such a plan should include, but not be limited to: i) a review of previous inspection reports by a third party expert; ii) excavation of sites identified by this review for visual examination of anomalies; iii) repairs as necessary; and iv) addressing factors in the failure and verify the integrity of the pipeline.

It is important to mention that the pipeline safety program can be only as effective as the interpretation of internal inspection reports.

There are several magnetographic devices that have been disclosed for non-destructive inspection of ferrous materials. In magneto-graphic inspection and defectoscopy the tested area of the material is placed in proximity to the magnetic medium. The changes of the surface-penetrating magnetic flux due to the material flows or deviations can be recorded. The resulting "magnetogram" of the material can provide the information about the location, size, and type of the defect or abnormality. In general, this information can be converted into the report about the quality of the material. Obtaining the magnetogram (magnetic picture) of the material in the course of the non-destructive inspection process is very challenging and typically requires additional forms of inspection, such as roentgenogram or an X-ray image.

For example, US4806862 (Kozlov) offers a contact method of magnetographic inspection of quality of materials, where a magnetic substance (such as liquid) is applied to be magnetized together with the tested material. According to the invention, the intensity of the magnetizing field is established by the maximum curvature of the surface of a drop of a magnetic fluid applied onto the surface of the material to be inspected, so that the resulting magnetogram can be used to assess the quality of the material.

In another magnetographic US4930026 (Kljuev), (also cf., USSR Inventor's Certificate No. 482,669, Cl. GOIN 27/89, published in "Biulleten Izobreteny" No. 32, 1975), the flaw sensor for magnetographic quality inspection is disclosed, which includes a flaw detector and a mechanism for driving the magneto-sensitive transducer. During the scanning procedure, the magnetic leakage fluxes penetrate through the surface of the material in places where flaws occur, resulting in a magnetogram of the tested material.

There is another magnetic technique has been proposed by US6205859 (Kwun) to improve the defect detection with magnetostrictive sensors for piping inspection. The method involves exciting the magnetostrictive sensor transmitter by using a relatively broadband signal instead of a narrow band signal typically used in order to avoid signal dispersion effects. The amplified detected signal is transformed by a short-time Fourier transform providing the identifiable signal patterns from either defects or known geometric features in the pipe such as welds or junctions. Underwater pipelines inspection by magnetosptictive sensors in described in US Patent application No. 13/336,302 by the authors of the present invention.

There is also a Russian technical standard (GOST), [RD 102-008-2002], certifying the technical condition of the pipe-line based on the results of the remote magneto-metric measurements. The defect areas risk-factor criteria and ranking (such as material stress: F-value) is used for planning a required sequence of repair and maintenance steps. Such criteria were developed by comparison of a risk-factor calculated using the defect geometry in calibration bore pits with a predicted risk-factor obtained by the remote magneto-metric data (i.e. comprehensive F-value of particular magnetic anomaly).

The deviations of F-value can be classified as follows: X1 - for negligible defects (good technical condition of the metal); X2 - for defects that require a planned repairs (acceptable technical condition); X3 - for defects that require immediate repairs (unacceptable, pre-alarm technical condition, alarm).

The absolute values X1-X3 of the F-value (comprehensive value of magnetic field anomaly) should be defined for each particular case, depending upon the following factors: i) Material (e.g. steel) type; ii) Topological location with the local background magnetic fields variation range, iii) Distance to the object (e.g. pipe-line installation depth), iv) General condition of the deformation-related tension within construction under testing, v) etc.

As a result, the only relative changes (variations) of the magnetic field can be evaluated for the given defective segment (relatively to the flawless segment), by comparison its relative F-values. Thus, the very moment of the ultimate stress-limit crossing can be identified for each defective segment during the real operation (i.e. under pressure/ loaded) condition. It can be done by monitoring the development of the defects within its F-value interval, namely, starting from the good technical condition X1 up until the yield-strengthlimit approaching and material breakdown. It provides a real possibility to predict the defect's speed development, resulting in increased accuracy in priority order definition for upcoming maintenance steps.

The aforementioned techniques are not satisfactory to be used for efficient prediction in defects development timeline and not capable of providing a real-time alert about the strength-limits approaching, i.e. when probable construction failure is about to occur.

The closest technology to the disclosed invention is shown in RU 2264617, describing the Magnetic Tomography (MT) technique of 'Contactless Pipe-line Defect Discovering, Localization and Device Doing the Same'. This technique includes a remote magnetic field vectors measurement in Cartesian coordinates with the movement of measuring device (magnetometer) along the pipe-line, the recording of the anomalies of magnetic field (on top of background magnetic field), processing of the data and report on found pipe-line defects with their localization shown in a resulting magnetogram. The technique provides a good sensitivity, also capable of discovering the following types of defects: i) Changing in geometry: dents, wavy surface, deformed shape of cross-section; ii) Metal loss, having mechanical, technological or corrosion nature; material discontinuity: layering and inclusions; iii) Cracks; iv) Welding flaws including girth weld defects. Moreover, such method provides a risk-factor (standard RD 102-008-2002) ranking of the discovered pipe-line defects accordingly to material tension concentration (factor F). Accordingly this technique was taken as initial prototype for the disclosed technology.

MT determines the comparative degree of danger of defects by a direct quantitative assessment of the stress-deformed condition of the metal. Conventional surveys only measure the geometrical parameters of a defect. Their subsequent calculations to assess the impact of the defect on the safe operation of the pipe do not take into consideration the stress caused by the defect. Therefore conventional surveys may fail to detect dangerously stressed areas of the pipe or, conversely, classify a defect as one which requires urgent attention when, in reality, the stress level may be low and the defect presents no immediate threat to the operation of the pipe. Since MT directly measures the stress caused by defects it is an inherently more accurate guide to the safe operation of the pipeline than conventional survey methods.

There are several methods for integrity assessment of extended structures (e.g. metallic pipes) that have been proposed in literature. Thus, US4998208 (Buhrow, et al) discloses the piping corrosion monitoring system calculates the risk-level safety factor producing an inspection schedule. The proposed system runs on a personal computer and generates inspection dates for individual piping elements. Corrosion data for individual inspection points within each circuit is used to estimate likely corrosion rates for other elements of the particular circuit. It translates into risk factors such as the toxicity, the proximity to the valuable property, etc. The system evaluates a large number of possible corrosion mechanisms for each inspection point providing a very conservative inspection date schedule.

There is another method disclosed in US6813949 (Masaniello, et al.), which addresses a pipeline inspection system having a serviceability acceptance criteria for pipeline anomalies, specifically wrinkles, with an improved method of correlating ultrasonic test data to actual anomaly characteristics.

There is a also known procedure of planning a sequence of repair and renovation steps to be applied to the defective segments of heating infrastructures and buildings (RU 2110011 C1 (21) 95112182 (22) 13/07/95 published 27.04.98). This method offers Infra-red imaging of the constructions under testing, defining the defective areas, digitizing their images and evaluating the excessive heat produced by defective areas. The resulting data leads to the planning of a sequence of steps required for repairs.

The disadvantage of this method is a limited area of application where the heattransferring objects, such as heating infrastructure, are present. Moreover, this method is effective only at the stage when the fracture and leakage have already been developed, causing the excessive heat radiation around the defective areas.

There are several methods for non-destructive testing of pipes have been known. Thus, US20060283251 (Hunaidi) suggests non-destructive condition assessment of a pipe carrying a fluid by evaluating the propagation velocity of an acoustic disturbance between two remote points on the pipe. A corresponding predicted value for the propagation velocity is computed as a function of the wall thickness.

Another non-destructive method US4641529 (Lorenzi, et al) discloses pipeline ultrasonic transducers in combination with photographic device for corrosion detection. Such ultrasonic transducer(s) produce a parallel beam for direction toward the pipe wall from inside a pipe, with a sufficiently large beam width to permit comparison of time displayed signal components in defect depth determination, with the signal propagating through a gaseous medium.

There is another method for estimating worst case corrosion in a pipeline is disclosed in US7941282 (Ziegel, et al), in which non-destructive pipeline wall thickness measurements are performed by sampled (at locations) ultrasonic and/or radiography (UT/RT) measurements. A distributed ILI data library for test pipelines is calibrated to correspond to UT/RT measurements for inspection. After sampling, the candidate statistical distributions are evaluated to determine which of the candidate most accurately estimates the worst case corrosion measured by ILI.

There is a known method for repair sequence planning based on possible (metal pipe) defects location and cause discovering by detecting anomalies in the magnetic field of pre-magnetized pipeline with special devices, such as pig-flow defectosopes, (RU Nº 2102652, 6F 17D5/00, published 1998).

Such method include a pipe-line setup with defectosope input-output chambers and a pig-flow device itself, as well as internal pipe-line surface cleaning means to provide the open cross-section needed to launch the pig-flow device. The method also requires a simultaneous magnetization of the pipe-wall along the pig-flow device movement and registration of anomalies based on scattering and saturation of the magnetic field, recording and processing of the information to conclude about defects location and nature.

As an example, another method can also be considered: RU2139515 filed Dec. 23, 1997). This method of evaluation of the material vulnerability and residual operation resource relies on the measured dependence between the mechanical (structural) defects (related to steel resistance) and steel parameters measured by non-destructive means, such as value of magnetic permeability measurement.

The, the technological outcome of present invention would include:
1) Expanding the implementation area, including not only the heating infrastructure and buildings but also various types of extended structures of metallic materials, including not-through defects in stage of development.
2) Increasing the reliability and accuracy of information about repair procedures suggested schedule. It can be done using the risk-factor ranking tables based on the absolute values of stress, compared against the values from regulatory documentation (for particular object).
3) Increasing the efficiency of the method by applying a visualization-assisted maintenance and repair schedule (with the real values of mechanical stress) to the actual structural layout, such as a pipe-line integrated into the existing topology, for example.

Such technological outcome can be achieved, mainly, due to the following innovative means: i) Remote (from the ground surface, non-destructive) identification of the defects and their respective risk-factors, by using improved measurements of the local mechanical stresses; ii) Remote identification of operational parameters for the defective segments of the structure, by using the absolute local stress values, compared against the values from regulatory documentation (for particular object), iii) Graphical visualization of the obtained information using the actual topological layout of the area and the structure in absolute geographical coordinates.

Principle and technical characteristics of a non-contact magnetic tomography method (MTM) to inspect metal oil and gas pipelines are described by Kexi Liao et al in "Principle and technical characteristics of non-contact magnetic tomography method inspection for oil and gas pipeline", INTERNATIONAL CONFERENCE ON PIPELINES AND TRENCHLESS TECHNOLOGY 2011: (ICPTT 2011); BEIJING, CHINA, 26 - 29 OCTOBER 2011, pages 1039-1048.

[KEXI LIAO et al "Standard and Application by Using Non-Contact Magnetic Tomography Method for Pipeline Technical Conditions Diagnosis", INTERNATIONAL CONFERENCE ON PIPELINES AND TRENCHLESS TECHNOLOGY 2011: (ICPTT 2011); BEIJING, CHINA, 26 - 29 OCTOBER 2011 disclose an overview to the use of the non-contact Magnetic Tomography Method (MTM) for non-destructive pipeline testing.

GEORGE JANEGA et al. "NYSEARCH's Validation Program Of Transkor's Magnetic Tomography Method Of Pipeline Inspection", PIPELINE & GAS JOURNAL, 1 June 2011 (2011-06-01), pages 30-31 gives a further overview on this topic.

RU 2 264 617 C2 describes a method for non-contact detection of position and type of defects of metallic structures. The document also describes a device that is suitable to perform such a method.

Anonymous "Transkor Intl UK Ltd ::: Summary of Procedure", dated 16 April 2010, retrieved from the Internet via "https://web.archive.org/web/20100416185222/http://www.transkor- intl.com/MTMFeatures/pagel.html" provides a summary of a non-destructive testing (NDT) procedure with a list of steps: 1) Analysis of pipeline design and operational documentation 2) visual inspection of the pipeline route 3) preparatory works 4) pipeline magnetic profile data collection 5) data processing 6) access technical condition of pipeline 7) mark out and excavate pipe in calibration pits 8) additional NDT on exposed pipe in calibration pits 9) Finalize results, conclusions and presentation of report.

Anonymous: "Transkor Intl UK Ltd ::: Gallery", dated 18 April 2010, retrieved from the Internet via "URL:https://web.archive.org/web/20100418022507/http://www.transkor- intl.com:80/Gallery/page3.html" provides a gallery of photos and links. The photos show persons that conduct tests. The photos are subtitles as "locating pipe", "magnetic data collection", "marking and verification" and "calibration and verification".

The anonymously published document https://wenku.baidu.com/view/6ae7cb6ca45177232f60a2d7.htm!?from=search&is btn=1 describes MTM pipeline inspection for several Chinese pipelines.

Nicolas Cardenas Ortiz et al. "A comparative study of unpiggable pipeline inspection techniques. Pipeline Pigging and Integrity Management Conference, February 2012, Houston USA explain the use of two techniques in combination, simplified: Magnetic Tomography [Method] MTM to detect defects and Metal Magnetic Memory (MMM) to evaluate the defects.

### SUMMARY OF THE INVENTION

The invention is directed to a magnetographic method for maintenance timeline planning that is optimized for underground metallic pipelines and is defined by independent claim 1. The following description of the measuring device will help to understand the claimed method. However, the device itself is outside the scope of protection of the appended claims and is not part of the claimed invention. A device for discovering, identification and monitoring of mechanical defects in metallic structures is disclosed. The device includes a sensor array registering a signal, a signal representing a density of magnetic field strength distribution along the metallic structure and an analogue-to-digital converter digitizing the signal. The device also includes a calculation unit that receives and analyzes the signal in order to provide an identification of signal anomalies. This identification is based on a magnetic tomography method that employs a known inverse magnetostrictive Villary effect of changing the magnetic susceptibility under applied mechanical stress resulting in distribution of magnetic field gradient along the structure surface. The distribution of magnetic field, in turn, provides information about the presence and the value of the magnetic field anomaly at the given location of the structure.

The sensor within the device can be built as a 3-dimensional array, providing a 3-dimensional distribution of the signal anomaly within a measurement area. After the sensor, the signal is first recorded by a memory unit and later processed by the calculation unit for more accurate and reliable results.

The calculation unit is capable of communicating with the sensor array remotely and is connected to light- and/or sound- means in order to alarm an operator about the signal anomaly value in a real-time situation, if needed.

To further support the identification, the obtained signal can be compared with pre-determined technological information, such as look-up tables, standards, thresholds, or calibrated using an alternative method, such as a contact bore pit measurement.

The device is also includes the information visualization unit for representing the signal anomalies along with the topology of the metallic structure under testing. A Global Positioning Sensor unit can be used for simultaneous recording of anomalies coordinates. Moreover, a Gyroscope and/or accelerometer unit can also be used for the sensor angle position measurement.

The device can be used in various situations and for various extended metallic objects, such as a (unpiggable) pipeline, a cable, a rail, a rolled metal product, a reservoir, a bridge or a vessel. Generally, such objects can be located underwater or underground and the identification can be performed through a ground or water layers, without interruption of the object regular operation. The device can also be powered by the battery for field measurements, with the battery-charge monitoring incorporated into the device.

### BRIEF DESCRIPTION OF THE DRAWINGS

Figure 1: The block-diagram of the device for non-contact discovering, identification and monitoring of mechanical defects in metallic structures.
Figure 2: A principle of operation of the magneto-graphic technique used in metallic structure defects monitoring and integrity assessment.
Figure 3: An example of a single magneto-graphic measurement. The diagram represents the three areas of a magnetic field anomalies (a), (b) and (c) corresponding to the respective local mechanical stresses. The area (c) shows the evidence of the metal stress yielding-limit crossing.
Figure 4: Block-diagram for metallic structure integrity assessment and maintenance planning method.

### DETAILED DESCRIPTION OF THE PREFERRED EMBODIMENT

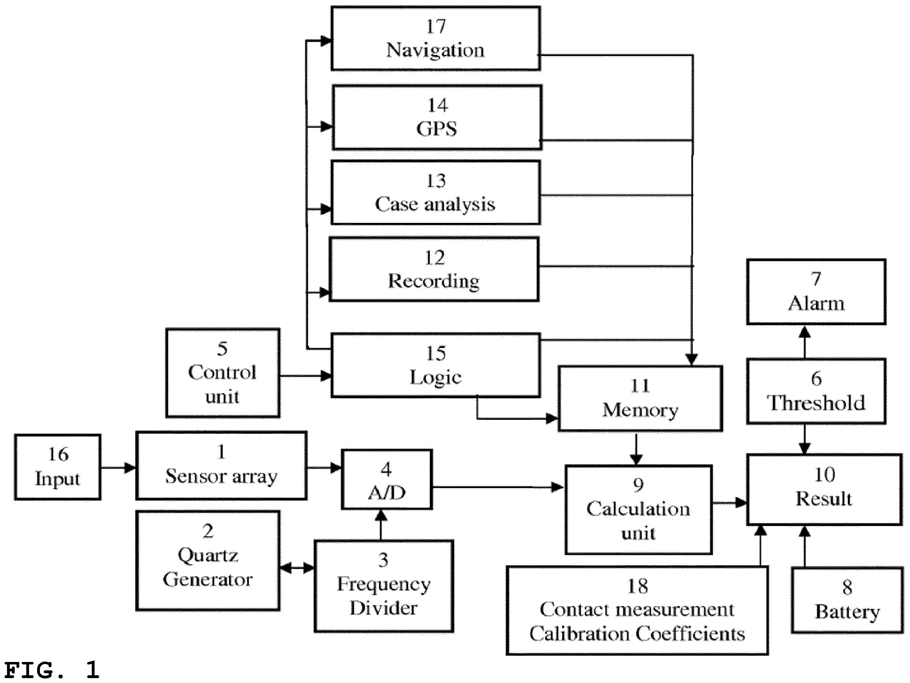

The present invention describes the magnetic tomography (MT) device for magnetographic identification and analysis of mechanical flaws/defects, optimized for extended metallic constructions inspection. The block-diagram of the device is given in Figure 1.

The magnetic tomography device is based on using of the inverse magnetostrictive (Villary) effect ― i.e. the changing of the material magnetic susceptibility under applied mechanical stress. Generally, such technique uses "natural" magnetization of the ferrous pipes by magnetic field of the Earth.

The use of MT device has following advantages: 1) Applicable for the unpiggable pipelines or other objects where in-line inspection method is inapplicable; 2) the objects to be inspected include but not limited to: compressor stations pipelines, pipeline inclusions, watersupply pipelines in cities; 3) the use of MT device doesn't require any preparation of the pipeline for testing such as cleaning, opening the pipe, or stopping pipeline operation; 4) the use of MT device doesn't require magnetizing of the object's pipes; 5) MT device capable of detecting flaws of various types including long crack-like pipe-line defects and welding defects; 6) the use of MT device doesn't have limitation on the structure diameter, configuration and protective coatings, for example, change of pipe diameter/wall-thickness, turns and their directions, transported product (e.g. gas, oil, or water), inside pressure, pipeline protection (e.g. cathodic protection, etc).

The MT device is capable to evaluate the degree of danger of defects by the level of concentration of mechanical tensions rather than defect geometry (e.g. length-widthdepth).

The MT device is particularly suitable for running a database on condition certification of objects of any length and any monitoring period.

The MT device implementation guarantees minimal customer resources use for monitoring preparation and repair works such as: i) reduces work volume and total costs of pipe access works; ii) greatly reduces time of full diagnostic - repair evaluation - repair planning - repair cycle; iii) gives pipe corrosion prognosis and estimates levels of tensedeformed state of the pipeline under current operating conditions.

The MT device application provides a non-contact metal flaws monitoring, which is particularly suitable for hidden (underground/ underwater) ferromagnetic constructions of extended length. The block-diagram of such device is shown in Figure 1.

The registration of magnetic field anomalies in extended metallic structures (such as a pipe) is performed in predetermined coordinate system relatively to the structure (axis) with a known (fixed) sensor array aperture. The coordinates of each single measurement along the structure can be chosen accordingly to the cross-section size and burial depth of the (underground, underwater) structure. It results in the matrix distribution of magnetic field gradient along the structure surface area under each single measurement. The presence and the value of the magnetic field anomaly at the given location are derived from the comparison of different increments of the Earth's magnetic induction vector modulus.

The MT device comprises of a sensor array (1), a quartz generator (2), a frequency divider (3), analogue-to-digital converter (A/D) (4), a control unit (5), a threshold unit (6), a light- and sound- alarm unit (7), a battery charge indicator (8), a calculation unit (9), a (resulting ) information visualization unit (10), a memory unit (11), a recording unit (12), a case-analysis unit (13), a GPS unit (14), navigation unit (gyroscope/accelerometer) (17) and a logic unit (15). The device performs in a following manner:
The sensor array (1) registers induction gradients of the magnetic field (16) within construction under testing.

By using A/D converter (4), a digitized signal is: i) inputted into calculation unit as a preliminary data; ii) recorded by the memory unit (11). The Quartz generator (2) controls the frequency of the A/D converter (4).

The control unit (5) through the logic unit (15) controls the case analysis unit (13) with predetermined database and lookup tables, the recording unit (12), the GPS unit (14), the navigation unit (17) and the memory unit (11). The calculation unit receives the information from units (12), (13), (14), (17) through the memory unit (11), controlled by logic unit (15).

The real-time information from (4) is compared with the information from the threshold unit (6). By these means, the visualization of the real-time data against the threshold values is provided, enabling the alarming (by the unit (7)) an operator about potentially dangerous operational conditions of the structure. The remaining charge of the battery is monitored by (8). The calculation unit (9) is responsible for the information processing, providing the information to the resulting and visualization unit (10). The resulting and visualization unit (10) also accommodates inputs from the threshold unit (6) and the light-/ sound- alarm unit (7) which enables identification of the parameters' deviation from the background level, as well as (e.g. wirelessly) informing an operator about the deviation value in real-time, respectively.

Moreover, the resulting and visualization unit (10) is capable of receiving the results of the predetermined in-contact measurement (e.g. extracted from the local bore pit at the underground pipe) in a form of calibration coefficients in order to calibrate the calculated data of found magnetic anomalies.

The situational case-analysis unit (13) enables the analysis of the information in the context of pre-determined technological information and schemes, which, in combination with the GPS unit (14), provides more accurate topological mapping.

In the preferable configuration of the device, a GPS sensor (14) is complemented by a navigation unit that includes gyroscope(s) and/or set of accelerometer(s) (17), enabling the recording of the device's angle-positioning relatively to the extended metallic structure cross-section at each moment of the magneto-graphical measurements. The recorded angle-positioning data (including positioning relatively to horizon) is used further to correct the magneto-graphical measurements due to structural bending/turning-related deviations.

Accordingly, the absolute coordinates of discovered defects relatively to the (visible) reference objects can be obtained with the following registration in the database during the equipment assessment report.

In the preferable configuration of the mentioned device, each sensor array (1) consists of a few 3-compenent arrays, positioned along the 3 orthogonal dimensions. Alternatively, each array includes a few single-component sensors, such as optically pumped quantum analyzers. Using the optically pumped quantum analyzers in the sensor array (1) allows higher flaw-detection accuracy in underground constructions, well-suited for detecting relatively small values of mechanical stress, and/or deeper underground installation.

Since the sensor array (1) can be rotated above the surface of the structure during the scanning procedure, it is possible to implement a polar coordinate system for defects detection, in combination with the data from the gyroscope/accelerometer unit (17).

The recording process is arranged in a discrete manner, enabling an independent storage and access for different recorded portions (memory segments) of the scanning.

In the preferable configuration of the mentioned device, the unit (9) calculates: i) magnetic field gradients distributed along the square area within the defined segment of the structure, ii) the values of the local mechanical stress within the defined segment of the structure.

In the preferable configuration, the disclosed device shown in Figure 1 is realized similarly to the device disclosed in RU2264617.

In the alternative configuration of the disclosure, the calculation unit (9) can be realized similarly to the US4309659 patent.

Moreover, in the alternative configuration of the disclosure, the recording unit (12) can be realized similarly to the RU2037888 patent.

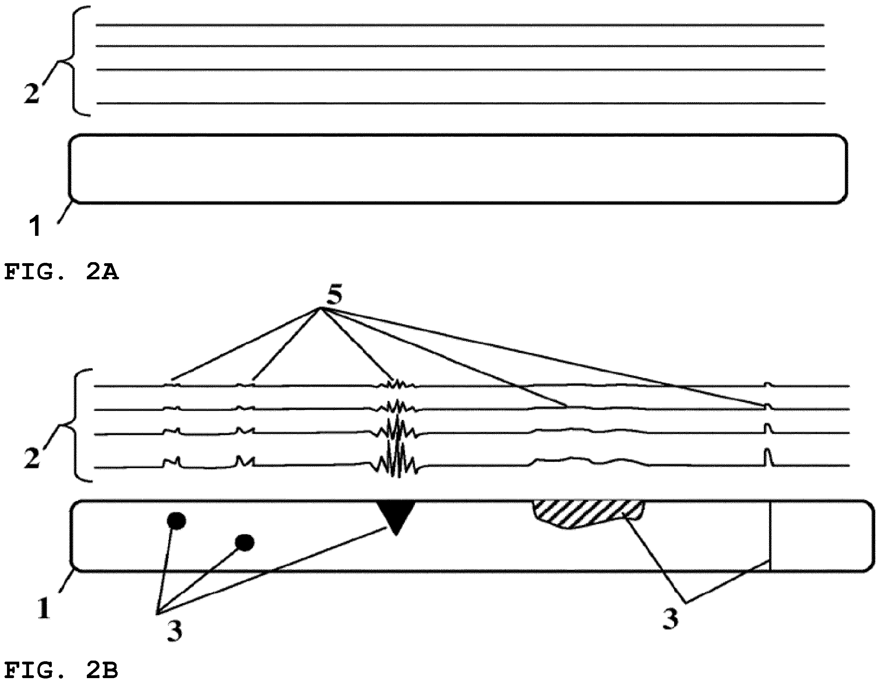

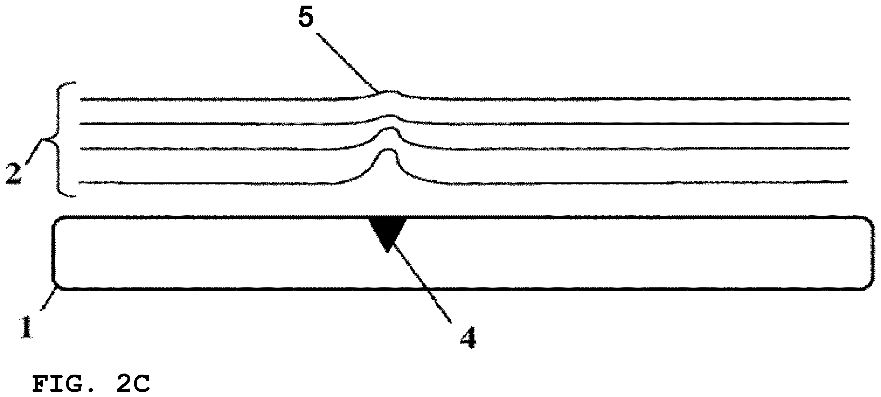

The principle of operation of the device shown in Figure 1 is explained further in Figure 2. Figure 2 has sub-figures FIG. 2A, FIG. 2B and FIG. 2C. The Figure 2a shows the structure (1) without defects, with the preliminary magnetic tomography charts (magnetogram) (2) showing the measured background (calibrated to zero) level of magnetization. The Figure 2b show the same structure (1) with the potential defects (3), (4) corresponded to the deviations of the tomography charts (5). The Figure 2c show the same structure (1) with the processed tomography charts (5), showing the location of the defect (4) that require an immediate attention (unacceptable, pre-alarm technical condition, alarm), based on the local mechanical stress value estimate.

As mentioned before, the magnetogram (2) attributes and characterizes the section of the structure by registering and analyzing changes in the magnetic field of the structure such as pipeline. These changes are related to stress, which, in turn, is related to defects in the metal and insulation. Magnetic measurements data is collected from the surface and includes the detected anomalies. Such detected anomalies are function of a local stress and/or local mechanical tension and structural changes in the metal. Moreover, a post-processing of this experimental data enables the visualization of the flaws in the structure.

The described MT device does not measure the dimensions of geometric defects alone, but, instead, provides a stress measurement caused by these defects and identifies their character, location and orientation in accordance with the location and orientation of the area of stress. Linear and angular coordinates of flaws in the metal and coating are have been experimentally defined within a tolerance of +/-0,25m.

The device explained by Figure 1 and Figure 2 can effectively identify and analyze the magnetic field anomalies in areas with stress concentrators caused by: i) defects or changes in structural conditions (such as metal loss, cracks, dents, lamination and inclusions); ii) erosion, seismic activity, or third-party damage.

The functionality of the device in Figure 1 and Figure 2, can further being explained by the following example. The particular MT measurement point was located at 1150 feet (350 meters) away from the scanning starting point. The signal value from the local anomaly was appeared to be 3.5-times larger than the local background value for seven consequent measurements. Two flaws, both caused by a metal deformation, had been determined by processing the signal profile.

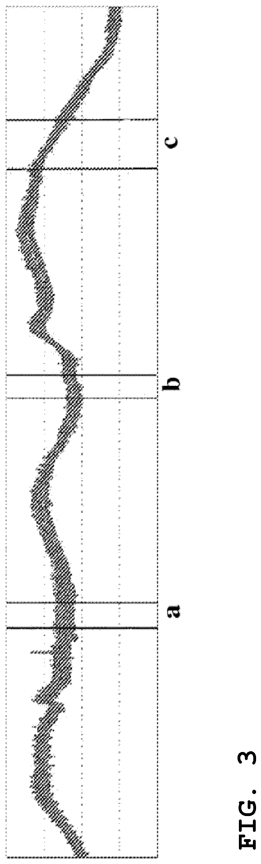

Figure 3 shows the example of a single magneto-graphic measurement. The diagram represents the three areas of a magnetic field anomalies (a), (b) and (c) corresponding to the respective local mechanical stresses. The area (c) shows the evidence of the metal stress yielding-limit crossing.

Based on this analysis, the construction opening (a local bore pit for underground pipe) had been performed for visual (and contact) defectoscopy at the location (c). The actual dimensions of defects (cracks and corrosion) have been evaluated. The magnetographic device calibration has been done based on a difference between the measured signal (versus background) and the actual parameters of the defect(s) found. Then, the calibrated values of the anomalies have been used as a criterion. For this particular case, the calibrated values appeared to be 3-10 times higher comparing to the background signal value. The follow-up magnetographic measurements have been performed in a real-time.

The presented MT device helps to plan necessary structural maintenance procedures and define their priorities. The device is particularly efficient when the magnetographic material (Magnetic Tomography) inspection is applied to extended metallic constructions, revealing its flaws against the topological map of the structure.

Moreover, the device enables direct monitoring of the defective construction segments with still acceptable technical conditions. It allows a long-term database support for the follow up monitoring, certification, prognosis and operational timeline for the structure.

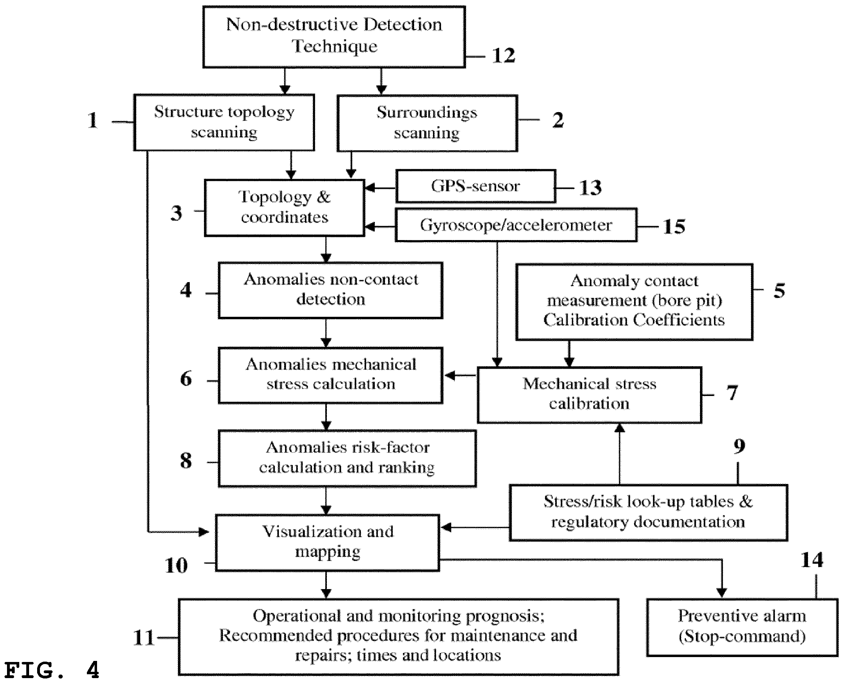

The present invention describes the magnetographic method maintenance timeline planning method (priority steps), optimized for extended metallic constructions. The block-diagram of the method is given in Figure 4.

The method includes (with reference to Figure 4): Precise scanning (1) using the non-destructive magneto-graphic (such as MT) anomalies detection technique (12) for (axial) localization of the extended metallic structure (e.g. subterranean or submarine pipeline), as well as surrounding scanning (2) for identification of other possible objects in the vicinity of the structure, including hidden objects (pipes, cables) detection (4) and identification of the defective segments or areas of the said structure, in general, by using thermo-visual imaging, magneto-graphic methods or by other remote (non-contact, non-destructive) methods; accurate location of different types of anomalies by using thermal and magnetic non-contact scanning sensors moving in Cartesian coordinates. Registering and processing of the obtained data and assessing resulting anomalies in accordance with their risk-factor and structural topology (mapping) (3). Identification of the absolute geographical coordinated for characteristic elements of the construction under testing (3), preferably by using a GPS sensor(s) (13) and (inertial) navigation system (gyroscope and/or accelerometers) 15. Non-contact detection (4) of the construction defects and flawless segments. In-contact measurement of at least one found defect (5) (e.g. visual, spectral, magneto-graphic). Calculation of the local metal stress at each found anomaly (6) and calibration (7), using calibrating coefficients obtained by in-contact method (5) and regulatory documentation and stress/risk look-up tables (9). Processing the obtained information about discovered defects and its ranking accordingly to the risk factor (value of mechanical stress) (8). Graphical visualization of the results in the form of the topological map of the construction using absolute values of geographical coordinates (10). The topological map would reflect the maintenance schedule to be applied to the construction following from the recorded mechanical stress values at the defective segments of the construction (9), (10). The method includes preventive warning means (14) to inform about defects that require immediate attention, e.g. unacceptable operational condition. The aforementioned method provides operational and monitoring prognosis (11) with an optimal priority planning for required maintenance steps for construction under testing.

In the preferred embodiment of the invention the non-destructive detection of anomalies in the structure is performed using magnetographic technique such as Magnetic Tomography.

The purpose of the present invention is to improve the technique RU 2264617, by overcoming: i) The lack of quantitative criteria for risk-factor real-time assessment and ranking required for proper planning of correct sequence of repair and maintenance procedures; ii) Low sensitivity in linear coordinate measurements without explicit geographical location information; ii) The limited visualization and visualization-assisted analysis options within the structural layout.

The main goals of the present invention are: i) to increase the method's applicability area; ii) to increase the accuracy of the priority scheduling for required maintenance and repair procedures; iii) to broad the spectrum of the potentially scheduled repair procedures, based on the additional data.

The preferred realization of the method is given below, as an example.

First Step: Detect the accurate location of the underground metallic pipe-line (its axis), as well as possible presence of other objects and structures (other pipes, cables, etc.) see Figure 1, (1), (2). Use the global positioning unit (13) as well as an angle navigation unit (15) for accurate topological mapping.

Second step: Performing magneto-graphic technique for non-destructive flaws detection in the structure, for example, by obtaining a magnetogram of the structure (4). In particular, the non-contact technique can be used to image magnetic properties of an object by using the eddy current effect for multi-dimensional scanning the internal layers of the metallic structure. The scanning is typically performed multiple (10-1000000) times, providing a 3-dimentional locations of the anomalies after processing (magnetogram).

Third step: Reaching the structure (i.e. in-contact measurement) at the location of one of the detected defective areas (e.g. calibration bore) (5), identification of the type of the most dangerous defects, evaluation of their parameters (by visual, spectral, magneto-graphic methods, for example) and development speed.

Fourth step: Calibrating (7) of the preliminary prognosis for all detected defects (of all types) and associated risk-factors (MIT results) by using additional (complementary) information obtained from the calibration bore explicitly (5). Namely, calibrating (7) the non-contact measurements (4) using calibration coefficients obtained from the at least one in-contact measurement (5). Comparison the calculated mechanical stress (and risk-factors) for these defects with the values from regulatory documentation and standard look-up tables (9). Typically, regulatory documentation consists of numbers that pre-calculated using the risk-factor evaluation algorithms applied to the known geometrical parameters of the known "calibrated" defects.

Fifth step: Searching for identical or similar (by amplitude, area, pattern, etc.) magnetic anomalies within the defective and not-defective segments of the structure.

Sixth step: Processing the detected magnetic anomalies (8) to define qualitative stress indices (i.e. F-value) that are characteristic risk-factor parameters for each found defect (of each type).

Seventh step: Processing (8), (9), (10) of all resulting parameters, using an appropriate software program; calculating the relative risk-factor distribution within each segment of the tested structure by taking into account all detected types of the defects. Evaluating relative distribution of the mechanical stress in vicinity of the defects by using obtained F-values. Estimating (11) the predicted time-line of the defects development and, as a result, recommending (11) a period of safe operation for the structure.

Eighth step: Visualizing the obtained results using the map with the real topological coordinates, depicting the structure, found defects and their corresponded risk-factor-distributions. Recommend the important locations at the map for optimal sequence of maintenance steps to be performed (10), (11). Providing preventive warning (14) to (e.g. wirelessly) inform an operator about defects that require immediate attention, e.g. unacceptable operational condition of the structure.

## Claims

1. A magnetographic method for maintenance timeline planning that is optimized for underground metallic pipelines (1), the method comprising:
detecting the accurate location of the metallic pipeline;
performing non-contact measurements of the mechanical stresses (4) by magnetographic techniques for non-destructive detection of flaws in the metallic pipeline, with a magnetic tomography device having a gyroscope/accelerometer recording the angle-positioning relatively to the metallic pipeline cross-section at each moment of the magneto-graphical measurements as angle-positioning data, to correct the magneto-graphical measurements;
performing an in-contact measurement (5) of the metallic pipeline at the location of one of the detected flaws to identify the type of a defect by evaluation of visual, spectral and magneto-graphic parameters;
calibrating (7) the non-contact measurements (4) by using calibration coefficients obtained from the in-contact measurement of the mechanical stresses (5), calibrating (7) being a magnetographic device calibration based on the difference between a measured signal and the parameters of the defect, with the value of the measured signal versus a background signal being 3 to 10 times higher for the measured signal in comparison to the background signal;
searching for identical or similar magnetic anomalies within defective and nondefective segments of the metallic pipeline;
processing detected magnetic anomalies (8) to define qualitative stress indices that are characteristic risk-factor parameters for each defect that was found; and
calculating a relative risk-factor distribution within the segments of the metallic pipeline that was tested.

2. The method of claim 1, wherein performing the non-contact measurements (4) images magnetic properties of an object by using the eddy current effect for multi-dimensional scanning the internal layers of the metallic pipeline.

3. The method of claim 1, further comprising: visualizing (10) the obtained results by using a map with real topological coordinates and depicting the metallic pipeline, the flaws, and corresponding risk-factor distributions.

4. The method of claim 1, wherein performing non-contact measurements comprises rotating a sensor array above the surface of the metallic pipeline during scanning, to implement a polar coordinate system of defect detection in combination with data from the gyroscope/accelerometer unit (17).

5. The method of claim 4, wherein performing non-contact measurements comprises using a magnetometer with a threshold unit (6) and a light-and sound-alarm unit (7), wherein real-time information (4) is compared with the information from the threshold unit (6) to provide visualization of the real-time information against the threshold values and enabling to alarm an operator.

## Patentansprüche

1. Magnetographisches Verfahren zum Planen von Wartungszeitplänen, das für unterirdische metallische Rohrleitungen (1) optimiert ist, wobei das Verfahren Folgendes umfasst:
Erfassen des genauen Standortes der metallischen Rohrleitung;
Durchführen von berührungslosen Messungen der mechanischen Spannungen (4) durch magnetographische Techniken für eine zerstörungsfreien Erfassung von Fehlern in der metallischen Rohrleitung, mit einem Magnettomographen, der ein Gyroskop/einen Beschleunigungsmesser aufweist, der die Winkelpositionierung relativ zu dem Querschnitt der metallischen Rohrleitung zu jedem Zeitpunkt der magnetographischen Messungen als Winkelpositionierungsdaten aufzeichnet, um die magnetographischen Messungen zu korrigieren;
Durchführen einer berührenden Messung (5) der metallischen Rohrleitung an dem Standort eines der erkannten Fehler, um die Art eines Defekts durch Auswertung von visuellen, spektralen und magnetographischen Parametern zu identifizieren;
Kalibrieren (7) der berührungslosen Messungen (4) durch Verwenden von Kalibrierkoeffizienten, die aus der berührenden Messung der mechanischen Spannungen (5) erhalten werden, wobei das Kalibrieren (7) eine Kalibrierung einer magnetographischen Vorrichtung basierend auf der Differenz zwischen einem gemessenen Signal und den Parametern des Defekts ist, wobei der Wert des gemessenen Signals gegenüber einem Hintergrundsignal für das gemessene Signal im Vergleich zu dem Hintergrundsignal 3 bis 10 mal höher ist;
Suchen nach identischen oder ähnlichen magnetischen Anomalien innerhalb defekter und nicht defekter Segmente der metallischen Rohrleitung;
Verarbeiten erfasster magnetischer Anomalien (8), um qualitative Spannungsindizes zu definieren, die charakteristische Risikofaktorparameter für jeden gefundenen Defekt sind; und
Berechnen einer relativen Risikofaktorverteilung innerhalb der Segmente der getesteten metallischen Rohrleitung.

2. Verfahren nach Anspruch 1, wobei das Durchführen der berührungslosen Messungen (4) magnetische Eigenschaften eines Objekts durch Verwenden des Wirbelstromeffekts zum mehrdimensionalen Abtasten der inneren Schichten der metallischen Rohrleitung abbildet.

3. Verfahren nach Anspruch 1, das ferner Folgendes umfasst: Visualisieren (10) der erhaltenen Ergebnisse durch Verwenden einer Karte mit realen topologischen Koordinaten und Darstellen der metallischen Rohrleitung, der Fehler und entsprechender Risikofaktorverteilungen.

4. Verfahren nach Anspruch 1, wobei das Durchführen von berührungslosen Messungen ein Drehen eines Sensorarrays über der Oberfläche der metallischen Rohrleitung während des Abtastens umfasst, um ein Polarkoordinatensystem der Fehlererfassung in Kombination mit Daten von der Gyroskop-/Beschleunigungsmessereinheit (17) zu implementieren.

5. Verfahren nach Anspruch 4, wobei das Durchführen von berührungslosen Messungen das Verwenden eines Magnetometers mit einer Schwellenwerteinheit (6) und einer Licht- und Tonalarmeinheit (7) umfasst, wobei Echtzeitinformationen (4) mit den Informationen von der Schwellenwerteinheit (6) verglichen werden, um eine Visualisierung der Echtzeitinformationen gegenüber den Schwellenwerten bereitzustellen und um es zu ermöglichen, einen Bediener zu alarmieren.

## Revendications

1. Procédé magnétographique pour la planification du calendrier de maintenance qui est optimisé pour des pipelines souterrains métalliques (1), le procédé comprenant :
la détection de l'emplacement précis du pipeline métallique ;
la réalisation d'analyses sans contact des contraintes mécaniques (4) par des techniques magnétographiques pour la détection non destructive de défauts dans le pipeline métallique, avec un dispositif de tomographie magnétique ayant un gyroscope/accéléromètre enregistrant le positionnement angulaire par rapport à la section transversale du pipeline métallique à chaque instant des analyses magnéto-graphiques comme données de positionnement angulaire, pour corriger les mesures magnétographiques ;
la réalisation d'une analyse en contact (5) du pipeline métallique à l'emplacement de l'un des défauts détectés pour identifier le type d'un défaut en évaluant des paramètres visuels, spectraux et magnéto-graphiques ;
l'étalonnage (7) des analyses sans contact (4) en utilisant des coefficients d'étalonnage obtenus à partir de l'analyse en contact des contraintes mécaniques (5), l'étalonnage (7) étant un étalonnage de dispositif magnétographique basé sur la différence entre un signal analysé et les paramètres du défaut, la valeur du signal analysé par rapport à un signal de fond étant 3 à 10 fois plus élevée pour le signal analysé par rapport au signal de fond ;
la recherche d'anomalies magnétiques identiques ou similaires dans les segments défectueux et non défectueux du pipeline métallique ;
le traitement d'anomalies magnétiques détectées (8) pour définir des indices de contrainte qualitatifs qui sont des paramètres caractéristiques des facteurs de risque pour chaque défaut trouvé ; et
le calcul d'une distribution relative des facteurs de risque dans les segments du pipeline métallique qui a été testé.

2. Procédé selon la revendication 1, dans lequel la réalisation des analyses sans contact (4) produit des images de propriétés magnétiques d'un objet en utilisant l'effet de courants de Foucault pour un balayage multidimensionnel des couches internes du pipeline métallique.

3. Procédé selon la revendication 1, comprenant en outre : la visualisation (10) des résultats obtenus en utilisant une carte avec des coordonnées topologiques réelles et illustrant le pipeline métallique, les défauts et les distributions de facteurs de risque correspondantes.

4. Procédé selon la revendication 1, dans lequel la réalisation d'analyses sans contact comprend la rotation d'un réseau de capteurs au-dessus de la surface du pipeline métallique pendant le balayage, pour mettre en œuvre un système de coordonnées polaires de détection de défauts en combinaison avec les données de l'unité gyroscope/accéléromètre (17).

5. Procédé selon la revendication 4, dans lequel la réalisation d'analyses sans contact comprend l'utilisation d'un magnétomètre doté d'une unité de seuil (6) et une unité d'alarme lumineuse et sonore (7), dans lequel les informations en temps réel (4) sont comparées aux informations provenant de l'unité de seuil (6) pour fournir une visualisation des informations en temps réel par rapport aux valeurs de seuil et permettant d'alerter un opérateur.
